# EUROPEAN PATENT APPLICATION

(11) **EP 1 968 279 A1**
(43) Date of publication of application: **10.09.2008**
(21) Application number: 08152309.4
(22) Date of filing: 05.03.2008
(51) Int. Cl.: H04L 29/06, H04L 12/22

(54) **System and method for preventing viruses from intruding into network**

(30) Priority: 05.03.2007 CN 200710073452; 19.02.2008 WO PCT/CN2008/070325
(71) Applicant: Huawei Technologies Co., Ltd., Longgang District, Shenzhen, Guangdong 518129 (CN)
(72) Inventor: Liu, Lifeng Huawei Technologies Co., Ltd., Shenzhen Guangdong 518129 (CN); Zheng, Zhibin Huawei Technologies Co., Ltd., Shenzhen Guangdong 518129 (CN)
(74) Representative: Epping - Hermann - Fischer

(57) **Abstract**

Some embodiments of the present invention provide a system and method for preventing viruses from intruding into a network. The system for preventing viruses from intruding into a network includes: a detection unit for performing virus detection on traffic passing through the network, and a control unit arranged between terminals and the network. The control unit is adapted to control access of the terminals to the network, and decide whether to allow the terminals to access the network according to detection result from the detection unit. According to the invention, all the traffic of a terminal infected by a virus is limited, and the connection between the terminal and the network is interrupted, thereby preventing the virus from diffusing and propagating widely over the network, and improving operation security of the network.

## Description

The application claims the priorities from the Chinese patent application No. 200710073452.2 submitted with the State Intellectual Property Office of P.R.C. on March 5, 2007, entitled "System and Method for Preventing viruses from Intruding into a Network", and the PCT patent application No. PCT/CN2008/070325 submitted on February 19, 2008, entitled "System and Method for Preventing viruses from Intruding into a Network", the contents of which are incorporated herein in entirety by reference.

### Field of the Invention

The invention relates to the field of network security, and in particular, to a method and system for preventing viruses from intruding into a network.

### Background of the Invention

Currently, virus has become one of the most important security issues confronted by a network. For example, a computer worm, once breaking out, may congest a network entirely in a few minutes, interrupts the operation of the network, thereby causing a serious network security accident. Each breakout of a computer worm may result in a great loss to the society. In addition, while the breakout of computer worms becomes more and more frequent, the types of computer worms are also increasing. The main principle of worm breakout lies in that, if a network terminal has a utilizable security vulnerability, the network terminal, when being attacked, may become a passive attack source. In other words, the network terminal may diffuse computer worms continuously, thereby forming a terrible chain reaction, affecting the availability of the network seriously.

In a conventional solution for preventing viruses from intruding into a network, each terminal is installed with proxy software for detecting the security condition of the terminal. If the terminal does not meet the requirements of an access security policy for example, if the terminal has an obvious security vulnerability or security defect, or is not installed with predetermined security guard software, the proxy software sends a notification to a control device of the network. According to the notification, the control device rejects the access of the terminal to the network and assists the terminal to repair the vulnerability and reinforce the security system of the terminal until the terminal meets the requirements of the access security policy. In this way, each terminal is forced to enhance its security immunity. In the case that terminals are under full control, the risk of virus breakout in the network may be reduced with this method. However, in many cases, such as in a metropolitan area network, a terminal is not under the control of the operator of the metropolitan area network. The operator of the metropolitan area network can not provide an imperative security inspection to each terminal accessing the metropolitan area network. Therefore, it may not be ensured that each terminal meets the requirements of a security policy. In other words, this solution can not find a wide applicability.

In another conventional solution, an intruding detection and intruding prevention device is utilized to prevent a virus from attacking the network. Once an attack is detected, the intruding detection and intruding prevention device immediately gives a warning or interdicts the attack. This solution is much effective in interdicting an attack. However, in the case of a computer worm, because a terminal attacked by the computer worm initiates a diffusive attack passively, the interdiction of the attack can not stop the attack attempts of the computer worm. Furthermore, the attack attempts of the computer worms may form a considerable attack traffic occupying a large amount of network bandwidth, thereby reducing the availability of the network. Therefore, with only the detection and interdiction of a computer worm, the problem of network congestion can not be solved effectively.

### Summary of the Invention

An embodiment of the invention provides a system and method for preventing viruses from intruding into a network to relieve the threat to the network resulted from a virus, so as to improve the network security.

A system for preventing viruses from intruding into a network according to an embodiment of the invention includes:
a detection unit, adapted to perform virus detection on traffic passing through the network, and output a detection result to a control unit; and
the control unit arranged between terminals and the network, adapted to control access of the terminals to the network, and decide whether to allow the terminals to access the network according to the detection result sent from the detection unit.

A method for preventing viruses from intruding into a network according to an embodiment of the invention includes:
performing virus detection in real time on traffic passing through the network,
if a behavior characteristic of diffusing a virus or a virus attack and diffusion is detected, locating a terminal having the behavior characteristic of diffusing the virus or the virus attack and diffusion, and reporting information about the terminal; and
rejecting the terminal to access the network according to the information about the terminal.

As can be seen, in an embodiment of the invention, a control unit is provided between a network and terminals, and virus detection is performed in real time to the traffic passing through the control unit, i.e. the traffic passing through the network. Once a virus is detected to have intruded into the network, all the traffic of the terminal(s) infected by the virus is limited, and the connection between the terminal(s) infected by the virus and the network is interrupted. In this way, the virus may be prevented from diffusing and propagating widely over the network, thereby improving the operation security of the network.

### Brief Description of the Drawings

Figure 1 is a diagram illustrating the architecture of a system for preventing viruses from intruding into a network according to an embodiment of the invention;
Figure 2 is a block diagram illustrating the access control device in the system as shown in Figure 1; and
Figure 3 is a flow chart illustrating a method for preventing viruses from intruding into a network according to an embodiment of the invention.

### Detailed Description of the Embodiments

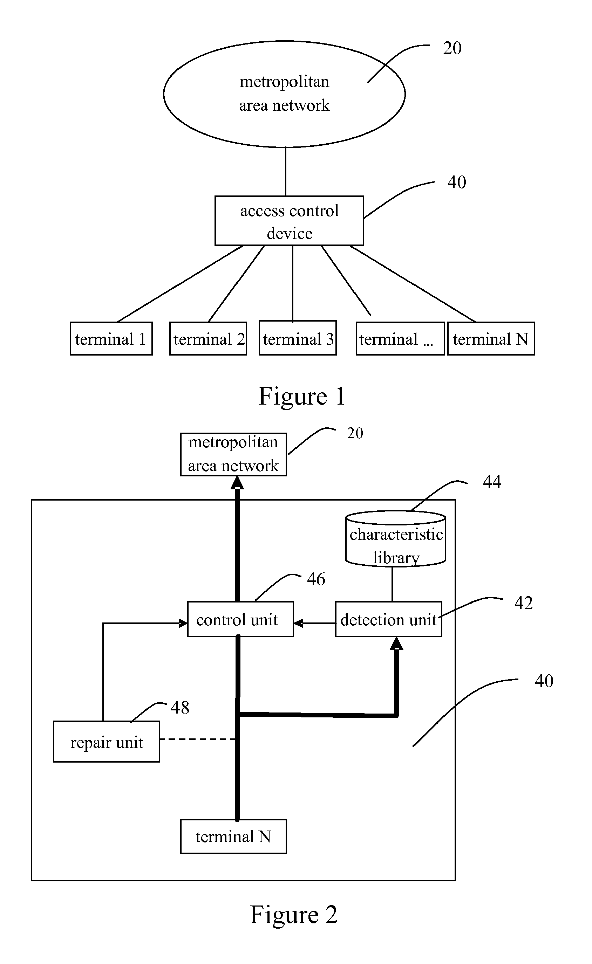

As shown in Figure 1, the system for preventing viruses from intruding into a network according to an embodiment of the invention includes an access control device 40 connected with the network. All of the terminals (1 to N) access a metropolitan area network 20 via the access control device 40. In the embodiment of the invention, the metropolitan area network 20 is utilized as an example of the network, and the connection or access may be in a wireless or wired manner.

As shown in Figure 2, the access control device 40 includes a detection unit 42, a control unit 46 and a repair unit 48. Each of the terminals accesses the metropolitan area network 20 via the control unit 46. The detection unit 42 is adapted to perform virus detection (in the embodiment, the viruses include computer worms) in real time to the traffic passing through the control unit 46. The detection unit 42 may perform virus detection on all the traffic, or to only the uplink traffic. Once detecting a behavior characteristic of a virus or any sign of attacking or diffusing of the virus (for example, when a computer worm breaks out, the entire traffic may be increased abruptly, the messages of scan types may be increased in a short time, and the traffic corresponding to the port, diffusing the computer worm, may also be increased rapidly), the detection unit 42 locates the terminal infected by the virus (for example, the terminal N), and sends a detection result including the information of the terminal N to the control unit 46. The control unit 46 limits all the traffic of the terminal N according to the detection result, rejects the access of the terminal N to the metropolitan area network 20, and notifies the terminal N to check and kill the virus and repair vulnerability (vulnerabilities). Once a terminal is detected to initiate an attack, the control unit rejects the access of the terminal to the metropolitan area network 20.

The control unit 46 may reject the access of the terminal N to the metropolitan area network 20 in different manners. The control unit 46 may reject to allocate an IP address to the terminal N, or may limit all the traffic sent from the terminal N, or may directly return a failure message in response to any access request sent from the terminal N, so as to reject the access of the terminal N to the metropolitan area network 20. The control unit 46 may employ other manners to reject the access of the terminal N to the metropolitan area network 20. In other words, the invention should not be limited to the above three manners.

The terminal N may check and kill the virus and repair the vulnerability (vulnerabilities) independently. After a successful repair, the terminal N sends a repair result to the control unit 46. The control unit may allow the terminal N to re-access the metropolitan area network 20 according to the repair result. Or, after the repair is completed, a user of the terminal N may send a request or information to the operator of the metropolitan area network 20. The operator controls the control unit 46 to allow the terminal N to re-access the metropolitan area network 20. The terminal N may also send a repair support request to the repair unit 48, and completes the repair under the guidance and assistance of the repair unit 48. After a successful repair, the repair unit 48 sends a message describing the repair result to the control unit 46. The control unit 46 allows the terminal N to re-access the metropolitan area network 20 according to the message.

The detection unit 42 may determine whether there is any virus intruding the metropolitan area network 20 by detecting whether the network traffic is abnormal or by conducting statistics of the attacks. The access control device may further include a characteristic library 44 for saving information related with viruses and/or attacks. The detection unit 42 may determine whether there is any virus intruding the metropolitan area network 20 by matching information of attacks or traffic passing through the network with the information in the characteristic library 44.

The detection unit 42, the control unit 46 and the repair unit 48 may be in one device, or may be in separated devices. The device or devices cooperates with existing network equipment to perform the functions. Alternatively, the detection unit 42, the control unit 46 and the repair unit 48 may be integrated in the existing network equipment. The detection unit 42, the control unit 46 and the repair unit 48 may employ existing network devices. For example, the detection unit 42 may employ a virus gateway or an intruding prevention system having a function of virus detection. The control unit 46 may employ a Broadband Access Server (BAS) or an exchange with an authentication function. The repair unit 48 may employ a virus library server or a patch server, etc.

In the system for preventing viruses form intruding into a network according to the embodiment, all the terminals are required to access the metropolitan area network 20 via the access control device 40 and the detection unit 42 performs virus detection in real time to the traffic passing through the control unit 46, all the traffic passing through the metropolitan area network 20 may be detected in real time by the detection unit 42. Therefore, once a virus is detected, the terminal(s) infected by the virus may be located and rejected to access the metropolitan area network 20. In this way, the virus may be prevented from diffusing and propagating widely over the network, thereby improving the operation security of the network.

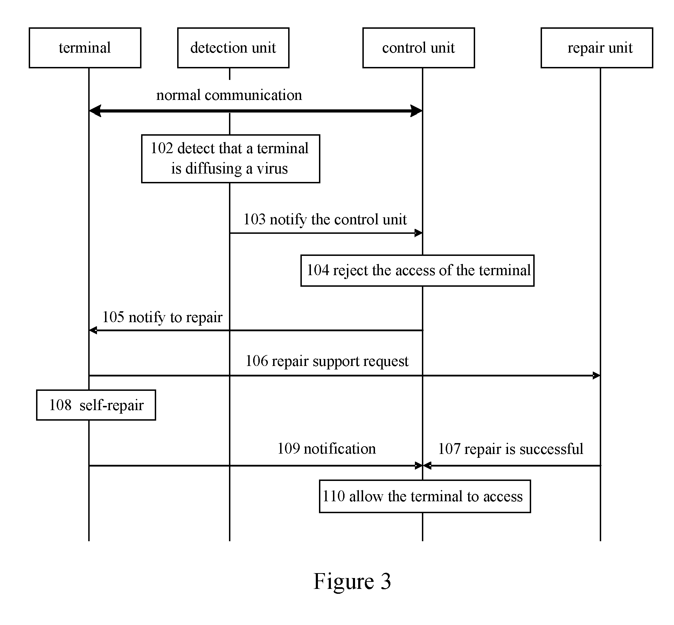

Figure 3 is a flow chart illustrating a method for preventing viruses from intruding into a network according to an embodiment of the invention. As shown in Figure 3, the method is as follows.

In step 102, during communication, a virus detection (in the embodiment, the viruses to be detected include computer worms) is performed in real time to the traffic passing through the control unit. The virus detection may be performed to all the traffic or to a part of the traffic. Because all of the terminals access the network via the control unit, the virus detection on the traffic passing through the control unit is practically performed to the traffic passing through the network. If a terminal is detected to have the behavior characteristic of diffusing a virus or a virus attack and diffusion, the process proceeds to step 103.

The virus detection may be performed by matching with the characteristic library. It may be determined whether there is any virus intruding the network by detecting whether the network traffic is abnormal or by conducting statistics of the attacks.

In step 103, the terminal is located, and information about the terminal is reported to the control unit of the network.

In step 104, the control unit limits all the traffic of the terminal and rejects the access of the terminal to the network according to the information about the terminal reported in step 103.

The control unit may reject the access of the terminal to the network in different manners. The control unit may reject to allocate an IP address to the terminal, or may limit all the traffic sent from the terminal, or may directly return a failure message in response to any access request sent from the terminal, so as to reject the access of the terminal to the network. The control unit may employ other manners to reject the access of the terminal to the network. In other words, the invention should not be limited to the above three manners.

In step 105, the terminal is notified to check and kill viruses or to repair vulnerabilities. If the terminal can not check and kill viruses or repair vulnerabilities independently, the process proceeds to step 106 and step 107. If the terminal can check and kill viruses or repair vulnerabilities independently, the process may proceed to step 106 and step 107, or may proceed to step 108 and step 109.

In step 106, the terminal sends a repair support request to the repair unit of the network, and checks and kills viruses or repairs vulnerabilities under the guidance and assistance of the repair unit.

In step 107, after the repair is successful, the repair unit notifies the control unit that the terminal has been repaired, and the process proceeds to step 110.

In step 108, the terminal checks and kills viruses or repairs vulnerabilities independently.

In step 109, after the repair is successful, the terminal notifies the control unit, and the process proceeds to step 110.

In step 110, the terminal is allowed to re-access the network.

It shall be appreciated by a person skilled in the art that all or part of the units or steps in the above embodiments may be implemented via relevant hardware instructed by programs. The programs may be stored in a computer readable medium, such as ROM/RAM, disc, and optical disc. Or, the units or steps may be fabricated into integrated circuit modules. Or all or part of the units or steps may be implemented by a single integrated circuit module. The invention is not limited to any particular combination of hardware and software.

In the method for preventing viruses from intruding a network according to the embodiment of the invention, virus detection is performed in real time to the traffic passing through the network. The terminal infected by a virus is rejected to access the network. In this way, the virus may be prevented from diffusing and propagating widely over the network, thereby improving the operation security of the network.

While some embodiments of the invention have been described above, it shall be appreciated that the solution of the invention may be modified according to the particular requirements during practical implementations. Therefore, it shall be appreciated that the above embodiments are only exemplary, and the protection scope of the invention should not be limited to these.

## Claims

1. A system for preventing viruses from intruding into a network, **characterized by** comprising:
a detection unit, adapted to perform virus detection on traffic passing through the network, and output a detection result; and
a control unit arranged between terminals and the network, adapted to control access of the terminals to the network, and decide whether to allow the terminals to access the network according to the detection result sent from the detection unit.

2. The system according to claim 1, **characterized by** further comprising:
a repair unit, adapted to provide repair support to a terminal diffusing a virus or infected by the virus; wherein the repair unit provides the repair support to the terminal in response to a repair request from the terminal.

3. The system according to claim 1 or 2, **characterized by** further comprising:
a characteristic library, adapted to save information related with viruses and/or attacks;
wherein the detection unit detects viruses by matching the traffic passing through the network with the characteristic library.

4. The system according to claim 1 or 2, **characterized in that** the virus detection performed to the traffic passing through the network comprises:
detecting all of the traffic passing through the network, or detecting only uplink traffic passing through the network.

5. A method for preventing viruses from intruding into a network, **characterized by** comprising:
performing virus detection in real time on traffic passing through the network;
if a behavior characteristic of diffusing a virus or a virus attack and diffusion is detected, locating a terminal having the behavior characteristic of diffusing the virus or the virus attack and diffusion, and reporting information about the terminal;
rejecting the terminal to access the network according to the information about the terminal.

6. The method according to claim 5, **characterized in that** after rejecting the terminal to access the network, the method further comprises:
notifying the terminal to check and kill the virus or to repair vulnerabilities;
checking and killing the virus or repairing the vulnerabilities; and
re-accessing the network.

7. The method according to claim 6, **characterized in that** checking and killing the virus or repairing the vulnerabilities and re-accessing the network comprises:
checking and killing the virus or repairing the vulnerabilities by the terminal;
notifying, by the terminal or a user of the terminal, a control unit of an access control device in the network, so that the terminal re-accesses the network.

8. The method according to claim 6, **characterized in that** checking and killing the virus or repairing the vulnerabilities and re-accessing the network comprises:
sending, by the terminal, a repair request to a repair unit of an access control device in the network;
checking and killing the virus or repairing the vulnerabilities for the terminal by the repair unit;
notifying, by the repair unit, a control unit of the access control device in the network, so that the terminal re-accesses the network.

9. The method according to any one of claims 5-8, **characterized in that** the virus detection comprises:
matching the traffic passing through the network with a characteristic library, to determine whether there is any behavior characteristic of diffusing a virus or any virus attack and diffusion.

10. The method according to any one of claims 5-8, **characterized in that** the virus detection comprises:
detecting whether the traffic passing through the network is abnormal, to determine whether there is any behavior characteristic of diffusing a virus or any virus attack and diffusion.

11. The method according to any one of claims 5-8, **characterized in that** the virus detection comprises:
performing statistics of attacks, to determine whether there is any behavior characteristic of diffusing a virus or any virus attack and diffusion.

12. A computer readable medium having computer executable instructions stored thereon which, when executed by a computer, causes the computer to perform the method of any one of claims 5 to 11.
